# NEW EUROPEAN PATENT SPECIFICATION

(11) **EP 2 910 112 B2**
(45) Date of publication and mention of the opposition decision: **18.09.2019**
(45) Mention of the grant of the patent: 16.11.2016
(21) Application number: 15397507.3
(22) Date of filing: 17.02.2015
(51) Int. Cl.: A01G 23/00

(54) **A mounting assembly, a forest machine, and a method for mounting a crane on a forest machine**
Zwischenmodul für die Montage eines Krans auf einer Forstmaschine, Forstmaschine mit dem Zwischenmodul und Verfahren zum Zusammenbau
Module pour monter une grue sur une machine forestiere, machine avec ce module et procédé d'assemblage

(30) Priority: 25.02.2014 FI 20145181
(43) Date of publication of application: 26.08.2015
(73) Proprietor: John Deere Forestry Oy, 33100 Tampere (FI)
(72) Inventor: Valkila, Jouni, 34130 Ylinen (FI)
(74) Representative: Berggren Oy, Tampere

(56) References cited:
- WO-A1-97/41056
- GB-A- 2 302 638
- US-A1- 2010 104 406

## Description

### Field of the invention

The invention relates to a mounting assembly for mounting a crane on a forest machine.

### Background of the invention

Typically, there are cranes of two different types in forest machines, namely so-called fixed cranes which are mounted on the working machine to swivel around a vertical axis only, or tilting cranes which are mounted on the forest machine to swivel in both vertical and horizontal planes. Normally, the mounting point for the fixed crane in the frame of the forest machine is positioned at a different height in comparison with the other parts of the forest machine, with respect to the mounting point of the tilting crane, because the distance between the mounting end of the fixed crane and the other parts of the crane is smaller than the distance between the mounting end of the tilting crane and the respective other parts of the crane.

It is also known to remove a rigid crane from the frame of the forest machine and to install a tilting mechanism between the rigid crane and the frame of the forest machine in such a way that this originally rigid crane can be turned into a tilting crane. However, in such a case, the crane is moved higher than before, because the tilting mechanism is installed between the crane and the frame of the forest machine. The tilting crane formed of the fixed crane in the above mentioned way is thus also higher than a tilting crane originally installed in the forest machine, because the point for mounting the crane on the forest machine intended for a fixed crane is, in the above mentioned way, normally higher than in a forest machine intended for a tilting crane.

Other solutions are known from e.g. US2010/104406 A1 and WO97/41056 A1.

Thus, these solutions of prior art involve the drawback that in order to have the crane always at a specific height which is the most advantageous one, in terms of its operation, with respect to the other parts of the forest machine, the frames intended for different cranes have to be made different, in terms of the mounting point of the crane. Now, if the type of the crane is to be changed from a fixed crane to a tilting one, or *vice versa,* the crane will be at a different height compared with the original position of the previous crane.

### Brief summary of the invention

It is an aim of the invention to provide a mounting assembly for bringing both the fixed crane and the tilting crane always at the same height although they are always mounted on forest machine frames equipped with identical mounting points for the crane.

The aim of the invention is achieved with a mounting assembly according to the invention, because when it is used for mounting the crane, one such mounting element of the mounting assembly is mounted between the mounting end of the crane and the mounting point for the crane in the frame of the forest machine, that has the effect that the distance between the crane and the mounting point for the crane on the frame of the forest machine will always be the same, irrespective of the type of the crane to be mounted on the working machine. To put it more precisely, the mounting assembly according to the invention will be presented in claim. Dependent claims 2 to 8 present some advantageous embodiments of the mounting assembly according to the invention.

The mounting assembly according to the invention has the advantage that, thanks to it, a frame equipped with the same type of mounting point for a crane can always be used in the forest machine, irrespective of the type of the crane to be mounted on the forest machine. This will reduce the number of different components, particularly frames for forest machines, to be supplied by a forest machine manufacturer, because the mounting point for the crane can be the same, irrespective of the type of the crane. This will also give the driver of the forest machine the possibility of replacing the crane in an existing forest machine in such a way that the position of the crane will remain at the same height in the vertical direction even if the pre-existing crane is replaced with a different crane.

The height of the mounting point for the crane, or the distance between the crane and its fixing point, which is to be maintained, by the mounting assembly according to the invention, as constant as possible, refers to the distance between the swivelling part of the swivel joint of the crane, *i.e.* the part where the hoisting boom begins, and the mounting point for the crane. Thus, the distance of the other parts of the crane will naturally depend on the dimensions and positions of the booms belonging to the crane. However, they are usually designed in such a way that the crane has the best working space and usability when it is placed at a given mounting height. Applying the mounting assembly according to the invention, this can be implemented by using a single frame structure for the forest machine, irrespective of whether a fixed or tilting crane is mounted on the forest machine.

### Description of the drawings

In the following, the invention will be described in more detail with reference to the appended drawings, in which
- Fig. 1: is a slanted view from above showing a forwarder whose frame is provided with a fixed crane instead of a tilting crane, by applying a mounting element of a mounting assembly according to the invention, and
- Fig. 2: shows a principle view in which the tilting crane has been removed and replaced with a fixed crane by installing one mounting element of the mounting assembly according to the invention between the mounting end of the fixed crane and the mounting point for the crane in the front frame of the forwarder.

### Detailed description of some advantageous embodiments of the invention

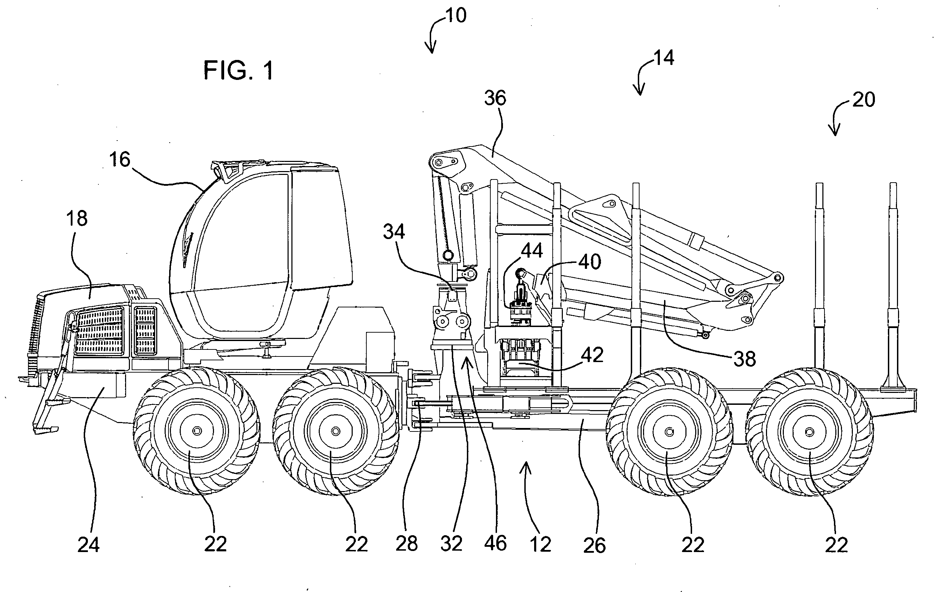

The forest machine shown in Fig. 1 is a forwarder 10, by which previously felled and delimbed logs, cut to length from felled trees, are transferred from the forest to a place that is suitable in terms of further transportation, for example onto the side of a main road or a railway, from where they are transported by timber transport trucks or by train to the users of the timber. The forwarder 10 shown in Fig. 1 comprises a frame 12, a crane 14, a cabin 16, a power source 18, a load space 20, and wheels 22 mounted on the frame.

The forwarder of Fig. 1 is equipped with frame steering, whereby its frame 12 consists of a front frame 24 and a rear frame 26, and a frame joint 28 therebetween. The crane 14 is mounted on the front part of the rear frame 26, right behind the frame joint 28, whereby the crane 14 is positioned as advantageously as possible in view of loading and unloading of the load space 20 supported by the rear frame 26.

In this case, the crane 14 is a typical fixed crane used in forwarders, comprising a mounting end 32, a swivel joint 34, a hoisting boom 36, a knuckle boom 38, an extension boom 40, as well as a loading grapple 42 suspended by a shackle joint 44 at the end of the extension boom 40.

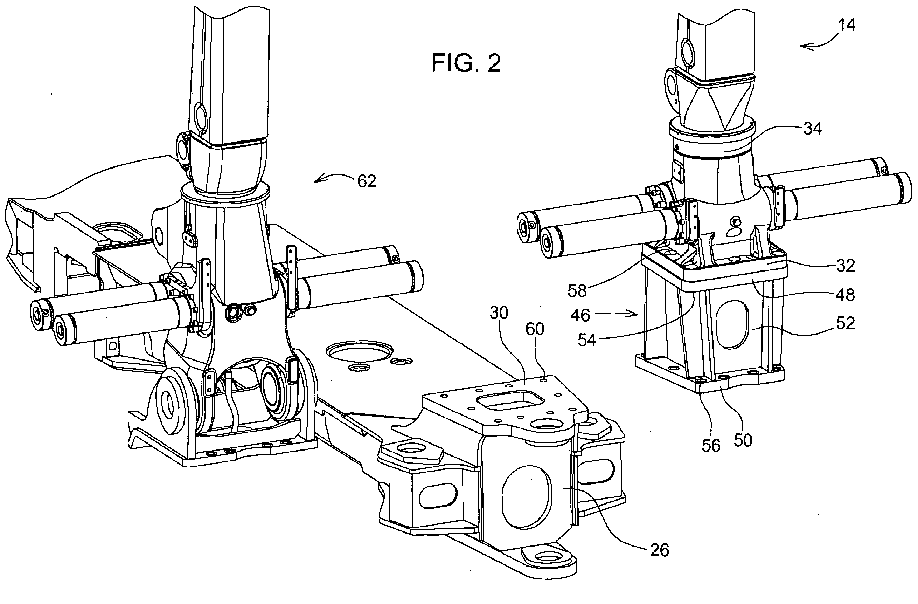

The crane 14 is mounted on the rear frame 26, at the mounting point 30 for the crane in the rear frame 26, as shown in Fig. 2, by means of a mounting element 46 installed between the mounting end 32 of the crane and the mounting point 30 for the crane. The mounting element 46 is part of a mounting assembly that comprises a variety of mounting elements which can be installed between the mounting end 32 of the crane and the mounting point 30 for the crane in the same way as the mounting element 46. It will depend on the crane to be mounted on the forwarder, which mounting element will be employed. The mounting element 46 is intended for mounting the fixed crane 14 shown in Fig. 1.

The mounting element 46 shown in Fig. 2 comprises a first mounting end 48 and a second mounting end 50, as well as an intermediate frame 52 between them. The first mounting end 48 is fastened by demountable mounting elements to the mounting end 32 of the crane 14, and the second mounting end 50 is fastened to the mounting point 30 for the crane in the rear frame 26 of the forwarder 10. In the mounting element 46 shown in Figs. 1 and 2, the intermediate frame 52 is a rigid sheet metal structure, whose two opposite ends are equipped with flanges formed of sheet metal and acting as the first mounting end 48 and the second mounting end 50. The edges of the flanges acting as the first mounting end 48 and the second mounting end 50 are provided with screw holes 54 and 56. These screw holes are positioned in the flanges in such a way that when the first mounting end is placed against the mounting end 32 of the crane, corresponding screw holes 58 therein can be aligned with the screw holes 54 of the first mounting end 48. In a corresponding manner, when the second mounting end 50 of the mounting element 46 is placed against the mounting point 32 for the crane, screw holes 60 therein can be aligned with the screw holes 56 in the second mounting end 50 of the mounting element 46. Thus, the first mounting end 48 of the mounting element 46 can be fastened to the mounting end 32 of the crane in a demountable way by screws fitted through the screw holes 54 and in the threaded screw holes 58, and the second mounting end 50 of the mounting element 46 can be fastened to the mounting point 30 for the crane in a demountable way by screws fitted through the screw holes 56 and in the threaded screw holes 60.

As described above, the intermediate frame 52 of the mounting element 46 shown in Figs. 1 and 2 is, for example, a solid sheet metal structure, at whose opposite ends the flanges formed of sheet metal and acting as the first mounting end 48 and the second mounting end 50 have been fastened by welding. Alternatively, the mounting element 46 can consist, for example, totally of a single casting.

As seen in Fig. 2, the mounting end 32 of the crane is also a flange with the shape of the first mounting end 48, having an edge provided with the threaded screw holes 58 at locations aligned with the screw holes 54 of the first mounting end. The flanges forming the first mounting end 48 and the mounting end 32 for the crane can have a flat surface, or they are, for example, shaped so that one of them is provided with one or more protrusions, and the other one with a protrusion or the like with a corresponding shape, so that the flanges cannot move with respect to each other in the direction of their abutting surfaces even if no fastening screws were driven in the screw holes 54 and 58 but the flanges were placed against each other. This facilitates the mounting of the crane and increases the resistance of the joint to transverse loads on the crane. Furthermore, the mounting point 30 for the crane in the front part of the rear frame 26 of the forwarder 10 (on the rear side of the frame joint 28) is, in this case, a flange matching, in shape, the flange of the second mounting end 50. These flanges to be fastened to each other by fastening screws can also have a flat surface or be designed in such a way that their shape prevents them from moving when placed against each other so that they cannot move in lateral directions with respect to each other even if the fastening screws were not driven in the screw holes 56 and 60.

In a second mounting element of the mounting assembly, similar to that shown in Figs. 1 and 2, the rigid intermediate frame can be replaced by a swivel joint, and an actuator can be installed between the first mounting end and the second mounting end, arranged to swivel the first mounting end with respect to the second mounting end. The swivelling axis of the joint can swivel with respect to an axis transverse to the longitudinal direction of the intermediate frame between the mounting ends; in other words, mounted on the rear frame 26 of the forwarder 10, the swivelling axis is parallel to the horizontal plane when the forwarder 10 is placed on level horizontal ground. By means of such a mounting element, the fixed crane can be turned into a tilting crane that fully corresponds, in its function, to the tilting crane of prior art.

A third mounting element could be, for example, a mounting element intended to be placed between the mounting point 30 for a crane in the forwarder 10 and the mounting end of a crane that is already provided with both a swivel joint and a tilting joint, in other words, a so-called tilting crane. Such a tilting crane 62 is shown on the left hand side of the front frame 26 in Fig. 2. So that such a crane would be set at the same height as the fixed crane 14 shown in Fig. 1, its solid intermediate frame is, in terms of length, shorter by approximately said tilting joint than the intermediate frame 52 of the mounting element 46, *i.e.* significantly shorter than the intermediate frame 52 and thereby lower when mounted in place.

The (fixed) crane 14 of the forwarder 10 according to Figs. 1 and 2 is mounted on the mounting point 30 for the crane in the rear frame 26 of the forwarder 10, by using the mounting element 46 shown in Fig. 2, in the following way:
- the mounting element 46 is placed against the mounting end 32 of the crane in such a way that the first mounting end 48 abuts the mounting end 32 of the crane and the screw holes 54 and 58 for the mounting screws are aligned;
- the mounting screws are fitted through the screw holes 54 into the screw holes 58 and driven into the threaded screw holes 58 so that the first mounting end 48 of the mounting element 46 is tightened against the mounting end 32;
- the crane 14 is hoisted onto the mounting point 30 for the crane in the rear frame 26 of the forwarder so that the second mounting end 50 of the mounting element 46 is placed against the mounting point 30 for the crane;
- the screw holes 60 of the second mounting end 50 of the mounting element and the screw holes 56 of the mounting element 46 are aligned;
- the mounting screws are fitted through the screw holes 56 and driven into the screw holes 60 so that the second mounting end 50 of the mounting element is tightened against the mounting point for the crane;
- finally, the hydraulic hoses of the hydraulic actuators of the crane 14, as well as possible connection cords of control electronics, limit switches, measuring sensors, and other electric devices are connected to respective socket connectors in the forwarder 10.

The crane 14 is demounted by performing the above mentioned operations in the reverse order. Alternatively, the crane 14 can be mounted in such a way that the mounting element 46 is fastened at its second mounting end 50 first to the mounting point 30 for the crane in the rear frame 26 of the forwarder 10, and first after that the crane 14 is mounted at its mounting end 32 to the first mounting end 48 of the mounting element 46. The other mounting elements belonging to this mounting assembly are fastened and removed, in principle, in the same way, at least in view of the joint between the second mounting end and the mounting point for the crane, because at least their second mounting ends have to be similar to the second mounting end 50 of the mounting element 46 shown in Fig. 2. There may be a difference in the way of mounting the first mounting end to the mounting end of the crane, because in another crane, the mounting end of the crane may be different due to differences in the crane, and in such a case, the first mounting end of the mounting element suitable for this crane is naturally designed to match the mounting end of this crane.

Furthermore, the mounting assembly according to the invention may also comprise mounting elements of a type different from the above mentioned mounting elements of a mounting assembly suitable for the forwarder 10 shown in Fig. 1 and intended for mounting a fixed crane or a tilting crane. In all of these, the size of each mounting element is preferably selected so that the crane mounted in place is always placed at the same distance from the mounting point for the crane in the frame of the forest machine, irrespective of the type of the crane. If there is also a tilting joint between the mounting element for the crane and the swivel joint, which tilting joint is so high that the crane will be at this preferred height or higher than that already when the mounting head of the crane is mounted on the mounting point for the crane in the forest machine without any mounting element, the crane can also be mounted without the mounting element at all. Such a situation could occur, for example, in the case of the tilting crane 62 on the left hand side of the rear frame 26 in Fig. 2. In the frame of the forest machine, in which the mounting assembly is applied, the mounting point for the crane can be made relatively low, because the best possible crane height can be easily achieved with mounting elements of a suitable size. It is thus also possible to mount as many different cranes as possible in such a way that the cranes are always set at the same height when using the same frame. On the other hand, the mounting point for the crane can, in an embodiment, also be provided in an elevated structure, wherein the size of mounting elements to be installed between the mounting end of the crane and the mounting point in the frame of the forest machine can be smaller so that the mounting elements will not be too massive, which may facilitate their installation. This is significant, for example, in the case of two or more cranes for the same forest machine, which are replaced at times, for example according to the need for use.

The mounting assembly according to the invention for a crane is suitable for not only forwarders but also other forest machines equipped with a crane mounted in a corresponding way. Thus, in view of various forest machines and cranes used in them, the mounting elements belonging to the mounting assembly according to the invention can be implemented, in many respects, in a different way compared with the mounting elements described above. For example, their first mounting ends and second mounting ends can be, instead of flanges fastened by screws, for example, plate or beam structures to be fastened at vertical surfaces to vertical plate structures mounted on the mounting point for the crane. Instead of fastening screws, the removable mounting means can be, for example, fastening bolts, pins, or mechanical or hydraulic locking mechanisms integrated in the mounting ends. In an embodiment, the intermediate frame between the mounting ends of the mounting element could, in principle, also comprise a swivel joint instead of or in addition to a rigid piece or a tilting joint, if the crane were a fixed crane without a swivel joint in the mounting end. Consequently, the invention is not limited to the example embodiments described above, but it may vary within the limits of the scope of the appended claims.

## Claims

1. A mounting assembly for mounting a crane (14) on a forest machine (10), the mounting assembly comprising several mounting elements (46), each being configured to be mounted between the crane (14) and a mounting point (30) for the crane in the forest machine, in which mounting assembly
- each mounting element (46) comprises a first mounting end (48) for the crane (14) and a second mounting end (50) for the mounting point (30) for the crane in the forest machine (10);
- each mounting element (46) forms primarily the same distance between the crane (14) and the mounting point (30) for the crane in the forest machine;
- at least one of the mounting elements comprises a swivel joint in such a way that the first mounting end (48) and the second mounting end (50) of the mounting element are configured to swivel with respect to an axis transverse to the longitudinal direction of the intermediate frame (52) of the mounting element (46) between the mounting ends (48, 50), whereby this axis is primarily parallel to the horizontal plane when the mounting element (46) is mounted in place on the forest machine (10); and
- at least one of the mounting elements comprises a rigid intermediate frame (52) between its mounting ends (48, 50).

2. The mounting assembly according to claim 1, **characterized in that** in a mounting element (46) intended for mounting a fixed crane (14), the distance between the first mounting end (46) and the second mounting end (50) is greater than in a mounting element intended for mounting a tilting crane.

3. The mounting assembly according to claim 1, **characterized in that** in a mounting element in the mounting assembly, which element is provided with said swivel joint between the first mounting end and the second mounting end, the part with the first mounting element is configured to be swivelled by an actuator with respect to the part with the second mounting end.

4. The mounting assembly according to any of the claims 1 to 3, **characterized in that** the first mounting end (48) in the mounting elements (46) is configured to be fastened by removable fastening means to a mounting end (32) in the crane (14), and the second mounting end (50) is configured to be fastened by removable fastening means to the mounting point (30) for the crane in the forest machine (10).

5. The mounting assembly according to any of the claims 1 to 4, **characterized in that** at least one of the mounting ends (48, 50) of the mounting elements (46) is a flange.

6. The mounting assembly according to claim 4 or 5, **characterized in that** the removable fastening means are screws and/or bolts.

7. The mounting assembly according to claim 6, **characterized in that** the first mounting end (48) of the mounting element (46) is a flange provided with screw holes (54) that can be aligned with screw holes (58) in the mounting end (32) of the crane, and that the second mounting end (50) is a flange provided with screw holes (56) that can be aligned with screw holes (60) in the mounting point (30) for the crane in the forest machine (10).

8. The mounting assembly according to any of the claims 4 to 7, **characterized in that** the first mounting end (48) and/or the second mounting end (50) of the mounting elements (46) is configured to be fastened to the mounting end (32) of the crane and/or to the mounting point (30) for the crane in the forest machine (10) by form locking separate from the removable fastening means so that the mounting element (46) cannot move with respect to the mounting end (32) of the crane and/or the mounting point (30) for the crane in the forest machine (10), at least in the direction of the plane transverse to the longitudinal direction of the mounting element (46).

## Patentansprüche

1. Montageaufbau zur Montage eines Krans (14) auf einer Forstmaschine (10), wobei der Montageaufbau mehrere Montageelemente (46) aufweist, die jeweils dafür ausgelegt sind, zwischen dem Kran (14) und einem Montagepunkt (30) für den Kran in der Forstmaschine montiert zu werden, bei welchem Montageaufbau
- jedes Montageelement (46) ein erstes Montageende (48) für den Kran (14) und ein zweites Montageende (50) für den Montagepunkt (30) für den Kran in der Forstmaschine (10) aufweist;
- jedes Montageelement (46) primär den gleichen Abstand zwischen dem Kran (14) und dem Montagepunkt (30) für den Kran in der Forstmaschine bildet;
- mindestens eines der Montageelemente ein Schwenkgelenk derart aufweist, dass das erste Montageende (48) und das zweite Montageende (50) des Montageelements dafür ausgelegt sind, in Bezug auf eine Achse quer zur Längsrichtung des Zwischenrahmens (52) des Montageelements (46) zwischen den Montageenden (48, 50) zu verschwenken, wobei diese Achse primär parallel zur horizontalen Ebene liegt, wenn das Montageelement (46) an seinem Platz auf der Forstmaschine (10) montiert ist; und
- mindestens eines der Montageelemente einen starren Zwischenrahmen (52) zwischen seinen Montageenden (48, 50) aufweist.

2. Montageaufbau nach Anspruch 1, **dadurch gekennzeichnet, dass** bei einem Montageelement (46) zur Montage eines festen Krans (14) der Abstand zwischen dem ersten Montageende (46) und dem zweiten Montageende (50) größer ist als bei einem Montageelement zur Montage eines Kippkrans.

3. Montageaufbau nach Anspruch 1, **dadurch gekennzeichnet, dass** bei einem Montageelement im Montageaufbau, welches Element mit dem Schwenkgelenk zwischen dem ersten Montageende und dem zweiten Montageende versehen ist, der Teil mit dem ersten Montageelement dafür ausgelegt ist, durch ein Stellglied in Bezug auf den Teil mit dem zweiten Montageende verschwenkt zu werden.

4. Montageaufbau nach einem der Ansprüche 1 bis 3, **dadurch gekennzeichnet, dass** das erste Montageende (48) in den Montageelementen (46) dafür ausgelegt ist, durch abnehmbare Befestigungsmittel an einem Montageende (32) in dem Kran (14) befestigt zu werden, und das zweite Montageende (50) dafür ausgelegt ist, durch abnehmbare Befestigungsmittel an dem Montagepunkt (30) für den Kran in der Forstmaschine (10) befestigt zu werden.

5. Montageaufbau nach einem der Ansprüche 1 bis 4, **dadurch gekennzeichnet, dass** mindestens eines der Montageenden (48, 50) der Montageelemente (46) ein Flansch ist.

6. Montageaufbau nach Anspruch 4 oder 5, **dadurch gekennzeichnet, dass** die abnehmbaren Befestigungsmittel Schrauben und/oder Bolzen sind.

7. Montageaufbau nach Anspruch 6, **dadurch gekennzeichnet, dass** das erste Montageende (48) des Montageelements (46) ein Flansch ist, der mit Schraubenlöchern (54) versehen ist, die mit Schraubenlöchern (58) in dem Montageende (32) des Krans ausgerichtet werden können, und dass das zweite Montageende (50) ein Flansch ist, der mit Schraubenlöchern (56) versehen ist, die mit Schraubenlöchern (60) in dem Montagepunkt (30) für den Kran in der Forstmaschine (10) ausgerichtet werden können.

8. Montageaufbau nach einem der Ansprüche 4 bis 7, **dadurch gekennzeichnet, dass** das erste Montageende (48) und/oder das zweite Montageende (50) der Montageelemente (46) dafür ausgelegt ist, an dem Montageende (32) des Krans und/oder an dem Montagepunkt (30) für den Kran in der Forstmaschine (10) durch Formschluss separat von den abnehmbaren Befestigungsmitteln befestigt zu werden, so dass sich das Montageelement (46) nicht in Bezug auf das Montageende (32) des Krans und/oder den Montagepunkt (30) für den Kran in der Forstmaschine (10) bewegen kann, zumindest in Richtung der Ebene quer zur Längsrichtung des Montageelements (46).

## Revendications

1. Ensemble de montage destiné au montage d'une grue (14) sur une machine forestière (10), l'ensemble de montage comprenant plusieurs éléments de montage (46), chacun étant conçu pour être monté entre la grue (14) et un point de montage (30) de la grue, situé dans la machine forestière, ensemble de montage dans lequel :
- chaque élément de montage (46) comprend une première extrémité de montage (48) destinée à la grue (14) et une seconde extrémité de montage (50) destinée au point de montage (30) de la grue, situé dans la machine forestière (10) ;
- chaque élément de montage (46) forme sensiblement la même distance entre la grue (14) et le point de montage (30) de la grue, situé dans la machine forestière ;
- au moins l'un des éléments de montage comprend un joint à rotule, de telle sorte que la première extrémité de montage (48) et la seconde extrémité de montage (50) de l'élément de montage sont conçues pour pivoter par rapport à un axe transversal à la direction longitudinale du cadre intermédiaire (52) de l'élément de montage (46) entre les extrémités de montage (48, 50), d'où il résulte que cet axe est sensiblement parallèle au plan horizontal, lorsque l'élément de montage (46) est mis en place sur la machine forestière (10) ; et
- au moins l'un des éléments de montage comprend un cadre intermédiaire rigide (52) entre ses extrémités de montage (48, 50).

2. Ensemble de montage selon la revendication 1, **caractérisé en ce que** dans un élément de montage (46) destiné au montage d'une grue fixe (14), la distance entre la première extrémité de montage (46) et la seconde extrémité de montage (50) est plus grande que dans un élément de montage destiné au montage d'une grue inclinable.

3. Ensemble de montage selon la revendication 1, **caractérisé en ce que** dans un élément de montage de l'ensemble de montage, lequel élément est pourvu dudit joint à rotule entre la première extrémité de montage et la seconde extrémité de montage, la partie dotée du premier élément de montage est conçue pour pivoter au moyen d'un actionneur, par rapport à la partie dotée de la seconde extrémité de montage.

4. Ensemble de montage selon l'une quelconque des revendications 1 à 3, **caractérisé en ce que** la première extrémité de montage (48) des éléments de montage (46) est conçue pour être fixée par des moyens de fixation amovibles, à une extrémité de montage (32) située dans la grue (14), et la seconde extrémité de montage (50) est conçue pour être fixée par des moyens de fixation amovibles, au point de montage (30) de la grue, situé dans la machine forestière (10).

5. Ensemble de montage selon l'une quelconque des revendications 1 à 4, **caractérisé en ce qu'**au moins l'une des extrémités de montage (48, 50) des éléments de montage (46) est une bride.

6. Ensemble de montage selon la revendication 4 ou 5, **caractérisé en ce que** les moyens de fixation amovibles sont des vis et/ou des boulons.

7. Ensemble de montage selon la revendication 6, **caractérisé en ce que** la première extrémité de montage (48) de l'élément de montage (46) est une bride pourvue de trous de vis (54) pouvant être alignés avec des trous de vis (58) ménagés à l'extrémité de montage (32) de la grue, et **en ce que** la seconde extrémité de montage (50) est une bride pourvue de trous de vis (56) pouvant être alignés avec des trous de vis (60) ménagés au point de montage (30) de la grue, situé dans la machine forestière (10).

8. Ensemble de montage selon l'une quelconque des revendications 4 à 7, **caractérisé en ce que** la première extrémité de montage (48) et/ou la seconde extrémité de montage (50) des éléments de montage (46) est ou sont conçue(s) pour être fixée(s) à l'extrémité de montage (32) de la grue et/ou au point de montage (30) de la grue, situé dans la machine forestière (10), par complémentarité de formes distincte des moyens de fixation amovibles, de manière que l'élément de montage (46) ne puisse pas se mouvoir par rapport à l'extrémité de montage (32) de la grue et/ou au point de montage (30) de la grue, situé dans la machine forestière (10), au moins dans la direction du plan transversal à la direction longitudinale de l'élément de montage (46).
